(19)

**Europäisches Patentamt**
**European Patent Office**
**Office européen des brevets**

(11) **EP 4 686 072 A1**

(12) **EUROPÄISCHE PATENTANMELDUNG**

(43) Veröffentlichungstag:
**28.01.2026 Patentblatt 2026/05**

(21) Anmeldenummer: **25187546.4**

(22) Anmeldetag: **04.07.2025**

(51) Internationale Patentklassifikation (IPC):
***H02M 3/335*** *(2006.01)* ***H02M 3/158*** *(2006.01)*
***H02M 1/00*** *(2006.01)*

(52) Gemeinsame Patentklassifikation (CPC):
**H02M 3/33573; H02M 1/0095; H02M 3/33584;**
H02M 1/0032; H02M 1/0048; H02M 3/1586

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**GE KH LA MA MD TN**

(30) Priorität: **24.07.2024 DE 102024120975**

(71) Anmelder: **HELLA GmbH & Co. KGaA**
**59552 Lippstadt (DE)**

(72) Erfinder:
• **Herrmann, Tobias**
**33102 Paderborn (DE)**
• **Issing, Jonas**
**59556 Lippstadt (DE)**
• **Schröder, Mario**
**59552 Soest (DE)**

(74) Vertreter: **Behr-Wenning, Gregor**
**HELLA GmbH & Co. KGaA**
**Rixbecker Strasse 75**
**59552 Lippstadt (DE)**

(54) **BIDIREKTIONALER DUAL-ACTIVE-BRIDGE DC/DC WANDLER MIT 50% HV-TASTGRAD UND MINDESTENS 50% LV-TASTGRAD**

(57) Gleichspannungswandler (100) umfassend: eine Steuereinrichtung (8) zum Steuern von NV-Halbleiterschalter (4.1a - 4.1d) und von HV-Halbleiterschalter (7.1a - 7.1d) mittels pulsweitenmodulierter Steuersignale (S-NV, S-HV), wobei die Steuereinrichtung (8) eingerichtet ist, die NV-Gleichspannung (Ug-NV) und die HV-Gleichspannung (Ug-HV) zu erfassen, basierend auf der NV-Gleichspannung (Ug-NV), der HV-Gleichspannung (Ug-HV) und einem Übersetzungsverhältnis (n) eines Transformators (3) einen theoretischen Pulsweitenmodulationstastgrad (D-t) zu ermitteln und in Abhängigkeit von dem theoretischen Pulsweitenmodulationstastgrad (D-t) ein pulsweitenmoduliertes Steuersignal (S-NV, S-HV) zu generieren.

Fig. 2

EP 4 686 072 A1

**Beschreibung**

Die vorliegende Erfindung betrifft einen Gleichspannungswandler umfassend: Niedervolt-Anschlüsse, an denen im Betrieb eine Niedervolt-Gleichspannung anliegt, Hochvolt-Anschlüsse, an denen im Betrieb eine Hochvolt-Gleichspannung anliegt, einen Transformator mit einer Niedervolt-Wicklung und einer Hochvolt-Wicklung, eine Niedervolt-Halbleiterbrückenschaltung mit Niedervolt-Halbleiterschaltern, die mit der Niedervolt-Wicklung des Transformators und mit den Niedervolt-Anschlüssen verbunden ist, eine Hochvolt-Halbleiterbrückenschaltung mit Hochvolt-Halbleiterschaltern, die mit der Hochvolt-Wicklung des Transformators und mit den Hochvolt-Anschlüssen verbunden ist, und eine Steuereinrichtung zum Steuern der Niedervolt-Halbleiterschalter und der Hochvolt-Halbleiterschalter mittels pulsweitenmodulierter Steuersignale.

Nachfolgend wird der Begriff "Niedervolt" mit "NV" abgekürzt und der Begriff "Hochvolt" mit "HV" abgekürzt.

Gleichspannungswandler eingangs genannter Art werden auch als "Dual Active Bridge Converter" bezeichnet und sind aus dem Stand der Technik bekannt. Derartige Gleichspannungswandler werden beispielsweise in elektrisch angetriebenen Kraftfahrzeugen, nachfolgend kurz "Elektro-KFZ", verwendet, wobei an die NV-Anschlüsse ein NV-Bordnetz des Elektro-KFZ angeschlossen ist und an die HV-Anschlüsse ein HV-Bordnetz des Elektro-KFZ angeschlossen ist. Das NV-Bordnetz ist hierbei typischerweise für eine Nennspannung von 12 V, 24 V und/oder 48 V ausgelegt, und das HV-Bordnetz ist typischerweise für eine Nennspannung von 400 V und/oder 800 V ausgelegt. Im Kraftfahrzeugbereich werden typischerweise mit dem Begriff "Niedervolt" elektrische Systeme bezeichnet, die mit Wechselspannungen im Bereich bis einschließlich 30 V oder mit Gleichspannungen im Bereich bis einschließlich 60 V arbeiten, und mit dem Begriff "Hochvolt" elektrische Systeme bezeichnet, die mit Wechselspannungen im Bereich zwischen 30 V und 1000 V oder mit Gleichspannungen im Bereich zwischen 60 V und 1500 V arbeiten.

Beim Laden der sogenannten Traktionsbatterie von Elektro-KFZ kann sich die an den HV-Anschlüssen des Gleichspannungswandlers anliegende HV-Gleichspannung je nach Art des verwendeten Ladesystems deutlich unterscheiden, weshalb Gleichspannungswandler für Elektro-KFZ typischerweise für HV-Gleichspannungen im Bereich von ca. 200 V bis zu ca. 900 V ausgelegt werden müssen. Bei aus dem Stand der Technik bekannten einstufigen Gleichspannungswandlern treten typischerweise insbesondere bei relativ niedrigen HV-Gleichspannungen jedoch relativ hohe Wandlungsverluste auf, sodass diese typischerweise bei relativ niedrigen HV-Gleichspannungen nur eine relativ ineffiziente Leistungsübertragung ermöglichen. Aus diesem Grund werden Gleichspannungswandler für Elektro-KFZ häufig mehrstufig aufgebaut, wodurch diese jedoch komplex und somit kostspielig und bauraumfordernd werden.

Der vorliegenden Erfindung liegt vor diesem Hintergrund die Aufgabe zugrunde, einen Gleichspannungswandler zu realisieren, der relativ einfach aufgebaut ist und auch bei relativ niedrigen HV-Spannungen noch eine effiziente Leistungsübertragung ermöglicht.

Diese Aufgabe wird erfindungsgemäß durch einen Gleichspannungswandler mit den Merkmalen des Anspruchs 1 gelöst.

Der erfindungsgemäße Gleichspannungswandler umfasst NV-Anschlüsse, an denen im Betrieb eine NV-Gleichspannung anliegt, und HV-Anschlüsse, an denen im Betrieb eine HV-Gleichspannung anliegt. Vorzugsweise ist der Gleichspannungswandler für die Verwendung in einem Elektro-KFZ ausgelegt, wobei die NV-Anschlüsse mit einem NV-Bordnetz des Elektro-KFZ verbunden werden und die HV-Anschlüsse mit einem HV-Bordnetz des Elektro-KFZ verbunden werden. Sowohl die NV-Anschlüsse als auch die HV-Anschlüsse können hierbei grundsätzlich auf jede beliebige aus dem Stand der Technik bekannte Art und Weise ausgebildet sein, die geeignet ist, die jeweiligen Spannungen und Ströme zu tragen, beispielsweise als Anschlussstecker oder Anschlussklemmen.

Der erfindungsgemäße Gleichspannungswandler umfasst ferner einen Transformator mit einer NV-Wicklung und einer HV-Wicklung, wobei die NV-Wicklung und die HV-Wicklung auf aus dem Stand der Technik bekannte Art und Weise derart magnetisch gekoppelt sind, dass beim Anlegen einer Eingangswechselspannung an die eine Wicklung eine Ausgangswechselspannung in die andere Wicklung induziert wird. Das Verhältnis zwischen der Eingangswechselspannung und der Ausgangswechselspannung kann hierbei insbesondere über das sogenannte Übersetzungsverhältnis des Transformators, also das Verhältnis der Windungszahlen der NV-Wicklung und der HV-Wicklung, festgelegt werden.

Der erfindungsgemäße Gleichspannungswandler umfasst ferner eine NV-Halbleiterbrückenschaltung mit NV-Halbleiterschaltern und eine HV-Halbleiterbrückenschaltung mit HV-Halbleiterschaltern, die jeweils mehrere, typischerweise vier, NV-Halbleiterschalter beziehungsweise HV-Halbleiterschalter umfassen, die auf aus dem Stand der Technik bekannte Art und Weise in Form einer sogenannten H-Brückenschaltung verschaltet sind. Im Speziellen umfassen die Halbleiterbrückenschaltungen jeweils mehrere, typischerweise zwei, sogenannte Halbbrücken, auf denen jeweils zwei Halbleiterschalter angeordnet sind, wobei einer der Halbleiterschalter als High-Side-Halbleiterschalter, nachfolgend kurz "HS-Schalter", bezeichnet wird, und der andere Halbleiterschalter als Low-Side-Halbleiterschalter, nachfolgend kurz "LS-Schalter", bezeichnet wird. Vorzugsweise sind die Halbleiterschalter sogenannte Feldeffekttransistoren (FET), besonders bevorzugt sogenannte Metall-Oxid-Halbleiter-Feldeffekttransistoren (MOSFET). Derartige Halbleiterbrückenschaltungen werden auch als Vierquadrantensteller bezeichnet. Die Halbleiterschalter werden hierbei mit pulsweitenmodulierten Steuersignalen, nachfolgend kurz "PWM-Signale" angesteuert, um eine bereitgestellte Gleichspannung in eine Wechselspannung zu wandeln, oder umgekehrt eine bereitgestellte Wechselspannung in eine Gleichspannung zu wandeln.

Bei dem erfindungsgemäßen Gleichspannungswandler ist die NV-Halbleiterbrückenschaltung mit der NV-Wicklung des Transformators und mit den NV-Anschlüssen verbunden, und ist die HV-Halbleiterbrückenschaltung mit der HV-Wicklung des Transformators und mit den HV-Anschlüssen verbunden. Die Wicklungen des Transformators sind hierbei jeweils mit zwischen dem HS-Schalter und dem LS-Schalter eines Zweiges der Halbleiterbrückenschaltung befindlichen Brückenpunkten der jeweiligen Halbleiterbrückenschaltung verbunden. Vorzugsweise ist ein erster NV-Anschluss mit den beiden LS-Schaltern der NV-Halbleiterbrückenschaltung verbunden und ein zweiter NV-Anschluss über eine erste Induktivität mit einem ersten Brückenpunkt der NV-Halbleiterbrückenschaltung und über eine zweite Induktivität mit einem zweiten Brückenpunkt der NV-Halbleiterbrückenschaltung verbunden. Vorzugsweise ist ein erster HV-Anschluss mit den beiden HS-Schaltern der HV-Halbleiterbrückenschaltung verbunden und ein zweiter HV-Anschluss mit den beiden LS-Schaltern der HV-Halbleiterbrückenschaltung verbunden.

Der erfindungsgemäße Gleichspannungswandler umfasst ferner eine Steuereinrichtung zum Steuern der NV-Halbleiterschalter der NV-Halbleiterbrückenschaltung und der HV-Halbleiterschalter der HV-Halbleiterbrückenschaltung mittels PWM-Signale. Derartige Steuereinrichtung werden auch als Gate-Treiber bezeichnet und sind im Stand der Technik hinsichtlich ihrer grundsätzlichen Funktion bekannt. Die PWM-Signale weisen hierbei typischerweise alle eine gleiche Pulsweitenmodulationsfrequenz, nachfolgend kurz "PWM-Frequenz" auf, können jedoch unterschiedliche Pulsweitenmodulationstastgrade, auch Duty-Cycle genannt, nachfolgend kurz "PWM-Tastgrad", aufweisen. Vorzugsweise werden alle HV-Halbleiterschalter stets mit einem PWM-Tastgrad von 50 % angesteuert und werden nur die PWM-Tastgrade, mit denen die NV-Halbleiterschalter angesteuert werden, variiert.

Typischerweise werden der LS-Schalter und der HS-Schalter einer Halbbrücke gegensätzlich angesteuert, also derart angesteuert, dass immer einer der beiden Halbleiterschalter eingeschaltet und der andere Halbleiterschalter ausgeschaltet ist. Hieraus ergibt sich, dass sich die PWM-Tastgrade der PWM-Signale des LS-Schalters und des HS-Schalters der gleichen Halbbrücke typischerweise - abgesehen von aufgrund von nichtidealen Schalteigenschaften der Halbleiterschalter beziehungsweise der Schaltung in der Praxis im Allgemeinen einkalkulierten Totzeiten - stets zu 100 % addieren, sodass - unter Berücksichtigung der einkalkulierten Totzeiten - gilt:

$$\text{PWM-Tastgrad(HS-Schalter)} = 100\,\% - \text{PWM-Tastgrad(LS-Schalter)}.$$

Sobald der PWM-Tastgrad eines der beiden Halbleiterschalter einer Halbbrücke bekannt ist, ist folglich auch der PWM-Tastgrad des jeweils anderen Halbleiterschalters der Halbbrücke bekannt. Ferner werden typischerweise alle Halbbrücken einer Halbleiterbrückenschaltung mit gleichen PWM-Tastgraden für ihre beiden Halbleiterschalter angesteuert, sodass alle PWM-Tastgrade einer Halbleiterbrückenschaltung typischerweise durch Angabe eines einzigen PWM-Tastgrads definiert sind. Sofern nicht anders angegeben, ist daher der Einfachheit halber nachfolgend unter dem betrachteten PWM-Tastgrad immer der PWM-Tastgrad der an die LS-Schalter der NV-Halbleiterbrückenschaltung bereitgestellten PWM-Signale zu verstehen.

Erfindungsgemäß ist die Steuereinrichtung eingerichtet, mittels geeigneter Erfassungsmittel sowohl die NV-Gleichspannung als auch die HV-Gleichspannung zu erfassen und basierend auf der ermittelten NV-Gleichspannung, der ermittelten HV-Gleichspannung sowie dem bekannten Übersetzungsverhältnis des Transformators einen theoretischen PWM-Tastgrad zu ermitteln. Vorzugsweise ist die Steuereinheit hierbei eingerichtet, den theoretischen PWM-Tastgrad gemäß folgender mathematischer Formel zu ermitteln:

$$\text{theoretischer PWM-Tastgrad} = 1 - \text{Übersetzungsverhältnis} \cdot \frac{\text{NV-Gleichspannung}}{\text{HV-Gleichspannung}}$$

Erfindungsgemäß ist die Steuereinrichtung ferner eingerichtet, zu unterscheiden, ob der theoretische PWM-Tastgrad größer beziehungsweise gleich 50 % ist oder kleiner 50 % ist, und falls der theoretische PWM-Tastgrad größer oder gleich 50 % ist, zum Ansteuern eines oder mehrerer definierter Halbleiterschalter ein PWM-Signal mit einem dem theoretischen PWM-Tastgrad entsprechenden eingestellten PWM-Tastgrad und einer einer ersten PWM-Frequenz entsprechenden eingestellten PWM-Frequenz zu generieren, oder falls der theoretische PWM-Tastgrad kleiner 50 % ist, zum Ansteuern des einen oder der mehreren definierten Halbleiterschalter ein PWM-Signal mit einem eingestellten PWM-Tastgrad von 50 % und einer einer zweiten PWM-Frequenz entsprechenden eingestellten PWM-Frequenz zu generieren, wobei die zweite PWM-Frequenz größer ist als die erste PWM-Frequenz. Die Steuereinheit ist also eingerichtet, an den einen oder die mehreren definierten Halbleiterschalter stets PWM-Signale mit einem eingestellten PWM-Tastgrad von mindestens 50 % bereitzustellen, um eine zuverlässige Spannungswandlung durch den Transformator sicherzustellen. Dadurch, dass in denjenigen Fällen, in denen der theoretische PWM-Tastgrad kleiner 50 % ist, die der erhöhten zweiten PWM-Frequenz entsprechende eingestellte PWM-Frequenz anstelle der der ersten PWM-Frequenz entsprechenden eingestellten PWM-Frequenz verwendet wird, können sich aus dem Festlegen des eingestellten PWM-Tastgrads auf 50 % ergebende Wandlungsverluste - gegenüber einer Verwendung der der ersten PWM-Frequenz entsprechenden eingestellten PWM-Frequenz - signifikant verringert werden.

Der erfindungsgemäße Gleichspannungswandler ermöglicht daher, ohne dass hierfür weitere Wandlungsstufen vorgesehen werden müssten, eine effiziente Leistungsübertragung auch bei einem Betrieb mit relativ niedrigen HV-Gleichspannungen.

In einer bevorzugten Ausführung ist die Steuereinrichtung eingerichtet, die zweite Pulsweitenmodulationsfrequenz basierend auf der NV-Gleichspannung und der HV-Gleichspannung zu bestimmen, wodurch eine besonders effiziente Leistungsübertragung bei relativ niedrigen HV-Gleichspannungen erzielt werden kann.

Vorzugsweise umfasst die Steuereinrichtung hierbei eine Lookup-Tabelle, in der PWM-Frequenzwerte für unterschiedliche Spannungsverhältnisse zwischen HV-Gleichspannung und NV-Gleichspannung, also für unterschiedliche Werte für den Quotienten aus HV-Gleichspannung und NV-Gleichspannung, hinterlegt sind, wobei die Steuereinheit eingerichtet ist, die zweite PWM-Frequenz basierend auf der Lookup-Tabelle zu bestimmen, sodass zum Bestimmen der zweiten PWM-Frequenz keine komplexen Berechnungen erforderlich sind.

Bevorzugt ist die Steuereinheit eingerichtet, durch Einstellen einer Phasenverschiebung zwischen den zum Steuern der NV-Halbleiterschalter der NV-Halbleiterbrückenschaltung verwendeten PWM-Signalen und den zum Steuern der HV-Halbleiterschalter der HV-Halbleiterbrückenschaltung verwendeten PWM-Signalen einen über die NV-Anschlüsse abgegebenen NV-Strom oder einen über die HV-Anschlüsse abgegebenen HV-Strom zu regeln.

In einer bevorzugten Ausführung umfasst der erfindungsgemäße Gleichspannungswandler ferner eine Klemmschaltung mit mindestens einem Klemmkondensator, die mit der NV-Halbleiterbrückenschaltung verbunden ist. Vorzugsweise ist hierbei ein Anschluss der Klemmschaltung mit den HS-Schaltern der NV-Halbleiterbrückenschaltung verbunden und der andere Anschluss der Klemmschaltung mit den LS-Schaltern der NV-Halbleiterbrückenschaltung verbunden.

Ein Ausführungsbeispiel der vorliegenden Erfindung wird nachfolgend anhand der beigefügten Figuren beschrieben. Hierbei zeigt:

Fig. 1    eine Prinzipskizze eines erfindungsgemäßen Gleichspannungswandlers, und

Fig. 2    einen erfindungsgemäß von einer Steuereinrichtung des Gleichspannungswandlers aus Fig. 1 ausgeführten Ablauf zur Bestimmung von Parametern von pulsweitenmodulierten Steuersignalen.

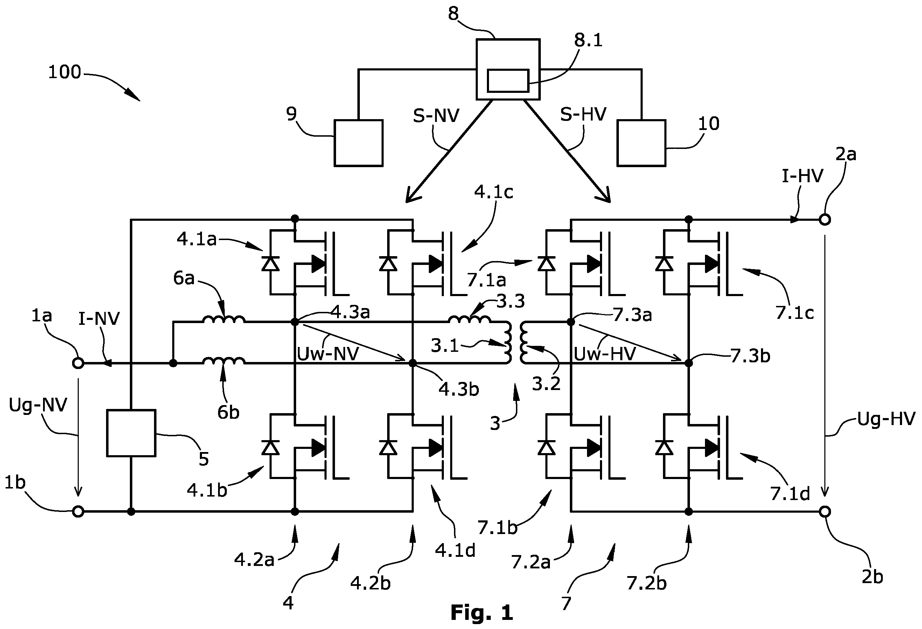

Fig. 1 zeigt einen erfindungsgemäßen Gleichspannungswandler 100 zur Wandlung einer NV-Gleichspannung Ug-NV in eine HV-Gleichspannung Ug-HV oder umgekehrt.

Der Gleichspannungswandler 100 umfasst NV-Anschlüsse 1a, 1b, an denen im Betrieb des Gleichspannungswandlers 100 die NV-Gleichspannung Ug-NV anliegt, und HV-Anschlüsse 2a, 2b, an denen im Betrieb des Gleichspannungswandlers 100 die HV-Gleichspannung Ug-HV anliegt.

Der Gleichspannungswandler 100 umfasst ferner einen Transformator 3 mit einer NV-Wicklung 3.1, einer HV-Wicklung 3.2 und einer Streuinduktivität 3.3, wobei die NV-Wicklung 3.1 eine Windungszahl N-NV und die HV-Wicklung 3.2 eine Windungszahl N-HV aufweist und der Transformator 3 somit ein Übersetzungsverhältnis n = N-NV/N-HV aufweist.

Der Gleichspannungswandler 100 umfasst ferner eine NV-Halbleiterbrückenschaltung 4 mit vier NV-Halbleiterschaltern 4.1a - 4.1d, die in Form einer sogenannten H-Brückenschaltung verschaltet sind, wobei ein erster NV-Halbleiterschalter 4.1a sowie ein zweiter NV-Halbleiterschalter 4.1b in einer ersten NV-Halbbrücke 4.2a der NV-Halbleiterbrückenschaltung 4 angeordnet sind, und wobei ein dritter NV-Halbleiterschalter 4.1c sowie ein vierter NV-Halbleiterschalter 4.1d in einer zweiten NV-Halbbrücke 4.2b der NV-Halbleiterbrückenschaltung 4 angeordnet sind.

Die beiden Halbbrücken 4.2a, 4.2b der NV-Halbleiterbrückenschaltung 4 sind jeweils mit einer Klemmschaltung 5 elektrisch verbunden, die einen oder mehrere Kondensatoren umfasst (hier aus Gründen der Übersichtlichkeit nicht dargestellt).

Die NV-Halbleiterbrückenschaltung 4 ist über einen an der ersten NV-Halbbrücke 4.2a zwischen dem ersten NV-Halbleiterschalter 4.1a und dem zweiten NV-Halbleiterschalter 4.1b befindlichen ersten NV-Brückenpunkt 4.3a sowie einen an der zweiten NV-Halbbrücke 4.2b zwischen dem dritten NV-Halbleiterschalter 4.1c und dem vierten NV-Halbleiterschalter 4.1d befindlichen zweiten NV-Brückenpunkt 4.3b mit der Streuinduktivität 3.3 und der NV-Wicklung 3.1 des Transformators 3 elektrisch verbunden.

Der Gleichspannungswandler 100 umfasst ferner eine erste NV-Induktivität 6a und eine zweite NV-Induktivität 6b, wobei die erste NV-Induktivität 6a an einer Seite mit dem ersten NV-Brückenpunkt 4.3a und an der anderen Seite mit einem ersten NV-Anschluss 1a elektrisch verbunden ist, und wobei die zweite NV-Induktivität 6b an einer Seite mit dem zweiten NV-Brückenpunkt 4.3b und an der anderen Seite mit dem ersten NV-Anschluss 1a elektrisch verbunden ist.

Der Gleichspannungswandler 100 umfasst ferner eine HV-Halbleiterbrückenschaltung 7 mit vier HV-Halbleiterschaltern 7.1a - 7.1d, die in Form einer sogenannten H-Brückenschaltung verschaltet sind, wobei ein erster HV-Halbleiterschalter 7.1a sowie ein zweiter HV-Halbleiterschalter 7.1b in einer ersten HV-Halbbrücke 7.2a der HV-Halbleiterbrückenschaltung 7 angeordnet sind, und wobei ein dritter HV-Halbleiterschalter 7.1c sowie ein vierter HV-Halbleiterschalter 7.1d in einer zweiten HV-Halbbrücke 7.2b der HV-Halbleiterbrückenschaltung 7 angeordnet sind.

Die beiden HV-Halbbrücken 7.2a, 7.2b der HV-Halbleiterbrückenschaltung 7 sind jeweils mit den HV-Anschlüssen 2a, 2b elektrisch verbunden.

Die HV-Halbleiterbrückenschaltung 7 ist über einen an der ersten HV-Halbbrücke 7.2a zwischen dem ersten HV-Halbleiterschalter 7.1a und dem zweiten HV-Halbleiterschalter 7.1b befindlichen ersten HV-Brückenpunkt 7.3a sowie einen an der zweiten HV-Halbbrücke 7.2b zwischen dem dritten HV-Halbleiterschalter 7.1c und dem vierten HV-Halbleiterschalter 7.1d befindlichen zweiten HV-Brückenpunkt 7.3b mit der HV-Wicklung 3.2 des Transformator 3 elektrisch verbunden.

Der Gleichspannungswandler 100 umfasst ferner eine Steuereinrichtung 8, die mit Steuereingängen aller vier NV-Halbleiterschalter 4.1a - 4.1d sowie mit Steuereingängen aller vier HV-Halbleiterschalter 7.1a - 7.1d elektrisch verbunden ist (hier aus Gründen der Übersichtlichkeit nicht dargestellt).

Die Steuereinrichtung 8 ist eingerichtet, durch geeignetes Ansteuern der vier NV-Halbleiterschalter 4.1a - 4.1d und der vier HV-Halbleiterschalter 7.1a - 7.1d sowohl eine über die NV-Anschlüsse 1a, 1b bereitgestellte NV-Gleichspannung Ug-NV in eine über die HV-Anschlüsse 2a, 2b abgegebene HV-Gleichspannung Ug-HV zu wandeln, als auch umgekehrt eine über die HV-Anschlüsse 2a, 2b bereitgestellte HV-Gleichspannung Ug-HV in eine über die NV-Anschlüsse 1a, 1b abgegebene NV-Gleichspannung Ug-NV zu wandeln

Für den ersten Wandlungsmodus ist die Steuereinrichtung 8 eingerichtet, die vier NV-Halbleiterschalter 4.1a - 4.1d mittels NV-PWM-Signalen S-NV derart anzusteuern, dass zwischen den NV-Brückenpunkten 4.3a, 4.3b der NV-Halbleiterbrückenschaltung 4 im Betrieb eine NV-Wechselspannung Uw-NV anliegt und somit an den Transformator 3 bereitgestellt wird, was dazu führt, dass von dem Transformator 3 eine HV-Wechselspannung Uw-HV an die HV-Brückenpunkte 7.3a, 7.3b der HV-Halbleiterbrückenschaltung 7 bereitgestellt wird.

Für den ersten Wandlungsmodus ist die Steuereinrichtung 8 ferner eingerichtet, die vier HV-Halbleiterschalter 7.1a - 7.1d mittels HV-PWM-Signalen S-HV derart anzusteuern, dass zwischen den HV-Anschlüssen 2a, 2b im Betrieb die HV-Gleichspannung Ug-HV bereitgestellt wird.

Für den zweiten Wandlungsmodus ist die Steuereinrichtung 8 eingerichtet, die vier HV-Halbleiterschalter 7.1a - 7.1d mittels HV-PWM-Signalen S-HV derart anzusteuern, dass zwischen den HV-Brückenpunkten 7.3a, 7.3b der HV-Halbleiterbrückenschaltung 7 im Betrieb eine HV-Wechselspannung Uw-NV anliegt und somit an den Transformator 3 bereitgestellt wird, was dazu führt, dass von dem Transformator 3 eine NV-Wechselspannung Uw-NV an die NV-Brückenpunkte 4.3a, 4.3b der NV-Halbleiterbrückenschaltung 4 bereitgestellt wird.

Für den zweiten Wandlungsmodus ist die Steuereinrichtung 8 ferner eingerichtet, die vier NV-Halbleiterschalter 4.1a - 4.1d mittels NV-PWM-Signalen S-NV derart anzusteuern, dass zwischen den NV-Anschlüssen 1a, 1b im Betrieb die NV-Gleichspannung Ug-NV bereitgestellt wird.

Die Steuereinrichtung 8 ist hierbei eingerichtet, stets HV-PWM-Signale S-HV mit einem eingestellten PWM-Tastgrad D = 50 % zu generieren.

Die Steuereinrichtung 8 ist ferner eingerichtet, die NV-PWM-Signale S-NV stets derart zu generieren, dass die NV-Halbleiterschalter 4.1a, 4.1c, also die HS-Schalter der NV-Halbleiterbrückenschaltung 4, gegensätzlich zu den NV-Halbleiterschaltern 4.1b, 4.1d, also zu den LS-Schaltern der NV-Halbleiterbrückenschaltung 4, geschaltet werden, sich also die PWM-Tastgrade der an den NV-Halbleiterschalter 4.1a und an den NV-Halbleiterschalter 4.1b bereitgestellten NV-PWM-Signale S-NV sowie die PWM-Tastgrade der an den NV-Halbleiterschalter 4.1c und an den NV-Halbleiterschalter 4.1d bereitgestellten NV-PWM-Signale S-NV - unter Berücksichtigung von einkalkulierten Totzeiten - stets zu 100 % addieren.

Unter dem Generieren von NV-PWM-Signalen S-NV mit einem eingestellten PWM-Tastgrad D ist daher nachfolgend zu verstehen, dass an den NV-Halbleiterschalter 4.1b und den NV-Halbleiterschalter 4.1d jeweils ein NV-PWM-Signal S-NV mit einem PWM-Tastgrad D bereitgestellt wird, und dass an den NV-Halbleiterschalter 4.1a und den NV-Halbleiterschalter 4.1c jeweils ein PWM-Signal mit einem PWM-Tastgrad (100 % - D) bereitgestellt wird.

Die Steuereinrichtung 8 ist hierbei eingerichtet, mittels einer NV-Überwachungseinrichtung 9 die NV-Gleichspannung Ug-NV zu erfassen und mittels einer HV-Überwachungseinrichtung 10 die HV-Gleichspannung Ug-HV zu erfassen, und basierend auf der NV-Gleichspannung Ug-NV, der HV-Gleichspannung Ug-HV und dem Übersetzungsverhältnis n des Transformators 3 gemäß nachfolgender mathematischer Formel einen theoretischen PWM-Tastgrad D-t zu ermitteln:

$$D\text{-}t = 1 - n \cdot \frac{Ug\text{-}NV}{Ug\text{-}HV}$$

Die Steuereinrichtung 8 ist ferner eingerichtet, für den Fall, das der ermittelte theoretische PWM-Tastgrad D-t größer oder gleich 50 % ist, NV-PWM-Signale S-NV mit einem eingestellten PWM-Tastgrad D, der dem theoretischen PWM-Tastgrad D-t entspricht, und einer eingestellten PWM-Frequenz F, die einer ersten PWM-Frequenz F1 entspricht, zu generieren.

Die Steuereinrichtung 8 ist ferner eingerichtet, für den Fall, das der theoretische PWM-Tastgrad D-t kleiner 50 % ist, NV-PWM-Signale S-NV mit einem eingestellten PWM-Tastgrad D = 50 % und einer eingestellten PWM-Frequenz F, die einer zweiten PWM-Frequenz F2 entspricht, zu generieren, wobei die zweite PWM-Frequenz F2 größer ist als die erste PWM-Frequenz F1.

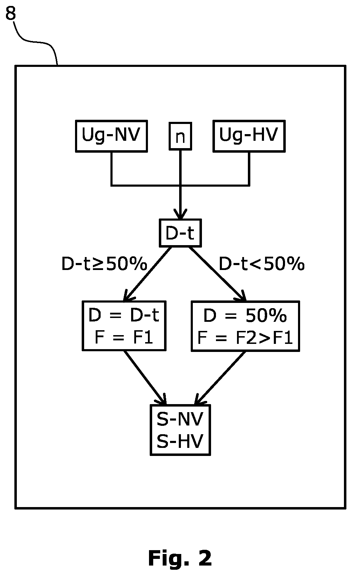

Der zuvor beschriebene Ablauf, der von der Steuereinrichtung 8 ausgeführten Bestimmung des eingestellten PWM-Tastgrads D und der eingestellten PWM-Frequenz F, ist in Fig. 2 skizziert.

Die Steuereinrichtung 8 ist hierbei eingerichtet, die zweite PWM-Frequenz F2 basierend auf der NV-Gleichspannung Ug-NV und der HV-Gleichspannug Ug-HV zu bestimmen.

Im Speziellen umfasst die Steuereinrichtung 8 eine Lookup-Tabelle 8.1, in der PWM-Frequenzwerte für unterschiedliche Spannungsverhältnisse zwischen NV-Gleichspannung Ug-NV und HV-Gleichspannung Ug-HV hinterlegt sind, und ist die Steuereinrichtung 8 eingerichtet, die zweite PWM-Frequenz F2 basierend auf der Lookup-Tabelle 8.1 zu bestimmen.

Die Steuereinrichtung 8 ist ferner eingerichtet, durch Einstellen einer Phasenverschiebung zwischen den an die NV-Halbleiterschalter 4.1a - 4.1d bereitgestellten NV-PWM-Signalen S-NV und den an die HV-Halbleiterschalter 7.1a - 7.1d bereitgestellten HV-PWM-Signalen S-HV auf grundsätzlich bekannte Art und Weise einen über die NV-Anschlüsse 1a, 1b abgegebenen NV-Strom I-NV oder einen über die HV-Anschlüsse 2a, 2b abgegebenen HV-Strom I-HV zu regeln.

Bezugszeichenliste

| | |
|---|---|
| 100 | Gleichspannungswandler |
| 1a, 1b | NV-Anschlüsse |
| 2a, 2b | HV-Anschlüsse |
| 3 | Transformator |
| 3.1 | NV-Wicklung |
| 3.2 | HV-Wicklung |
| 3.3 | Streuinduktivität |
| 4 | NV-Halbleiterbrückenschaltung |
| 4.1a - 4.1d | NV-Halbleiterschalter |
| 4.2a, 4.2b | NV-Halbbrücken |
| 4.3a, 4.3b | NV-Brückenpunkte |
| 5 | Klemmschaltung |
| 6a, 6b | NV-Induktivitäten |
| 7 | HV-Halbleiterbrückenschaltung |
| 7.1a - 7.1d | HV-Halbleiterschalter |
| 7.2a, 7.2b | HV-Halbbrücken |
| 7.3a, 7.3b | HV-Brückenpunkte |
| 8 | Steuereinrichtung |
| 8.1 | Lookup-Tabelle |
| 9 | NV-Überwachungseinrichtung |
| 10 | HV-Überwachungseinrichtung |
| | |
| D | eingestellter PWM-Tastgrad |
| D-t | theoretischer PWM-Tastgrad |
| F | eingestellte PWM-Frequenz |
| F1 | erste PWM-Frequenz |
| F2 | zweite PWM-Frequenz |
| I-HV | HV-Strom |
| I-NV | NV-Strom |
| n | Übersetzungsverhältnis |
| S-HV | HV-PWM-Signale |
| S-NV | NV-PWM-Signale |
| Ug-HV | HV-Gleichspannung |
| Ug-NV | NV-Gleichspannung |

Uw-HV    HV-Wechselspannung
Uw-NV    NV-Wechselspannung

**Patentansprüche**

1. Gleichspannungswandler (100) umfassend:

   Niedervolt-Anschlüsse (1a, 1b), an denen im Betrieb eine Niedervolt-Gleichspannung (Ug-NV) anliegt,
   Hochvolt-Anschlüsse (2a, 2b), an denen im Betrieb eine Hochvolt-Gleichspannung (Ug-HV) anliegt,
   einen Transformator (3) mit einer Niedervolt-Wicklung (3.1) und einer Hochvolt-Wicklung (3.2),
   eine Niedervolt-Halbleiterbrückenschaltung (4) mit Niedervolt-Halbleiterschaltern (4.1a - 4.1d), die mit der Niedervolt-Wicklung (3.1) des Transformators (3) und mit den Niedervolt-Anschlüssen (1a, 1b) verbunden ist,
   eine Hochvolt-Halbleiterbrückenschaltung (7) mit Hochvolt-Halbleiterschaltern (7.1a - 7.1d), die mit der Hochvolt-Wicklung (3.2) des Transformators (3) und mit den Hochvolt-Anschlüssen (2a, 2b) verbunden ist, und
   eine Steuereinrichtung (8) zum Steuern der Niedervolt-Halbleiterschalter (4.1a - 4.1d) und der Hochvolt-Halbleiterschalter (7.1a - 7.1d) mittels pulsweitenmodulierter Steuersignale (S-NV, S-HV),
   **dadurch gekennzeichnet, dass**
   die Steuereinrichtung (8) eingerichtet ist:

   die Niedervolt-Gleichspannung (Ug-NV) und die Hochvolt-Gleichspannung (Ug-HV) zu erfassen,
   basierend auf der Niedervolt-Gleichspannung (Ug-NV), der Hochvolt-Gleichspannung (Ug-HV) und einem Übersetzungsverhältnis (n) des Transformators (3) einen theoretischen Pulsweitenmodulationstastgrad (D-t) zu ermitteln, und
   falls der theoretische Pulsweitenmodulationstastgrad (D-t) größer oder gleich 50 % ist, ein pulsweitenmoduliertes Steuersignal (S-NV, S-HV) mit einem dem theoretischen Pulsweitenmodulationstastgrad (D-t) entsprechenden eingestellten Pulsweitenmodulationstastgrad (D) und einer einer ersten Pulsweitenmodulationsfrequenz (F1) entsprechenden eingestellten Pulsweitenmodulationsfrequenz (F) zu generieren, oder
   falls der theoretische Pulsweitenmodulationstastgrad (D-t) kleiner 50 % ist, ein pulsweitenmoduliertes Steuersignal (S-NV, S-HV) mit einem eingestellten Pulsweitenmodulationstastgrad (D) von 50 % und einer einer zweiten Pulsweitenmodulationsfrequenz (F2) entsprechenden eingestellten Pulsweitenmodulationsfrequenz (F) zu generieren, wobei die zweite Pulsweitenmodulationsfrequenz (F2) größer ist als die erste Pulsweitenmodulationsfrequenz (F1).

2. Gleichspannungswandler (100) nach Anspruch 1, wobei die Steuereinrichtung (8) eingerichtet ist, die zweite Pulsweitenmodulationsfrequenz (F2) basierend auf der Niedervolt-Gleichspannung (Ug-NV) und der Hochvolt-Gleichspannung (Ug-HV) zu bestimmen.

3. Gleichspannungswandler (100) nach Anspruch 1, wobei die Steuereinrichtung (8) eine Lookup-Tabelle (8.1) umfasst, in der Pulsweitenmodulationsfrequenzwerte für unterschiedliche Spannungsverhältnisse zwischen Niedervolt-Gleichspannung (Ug-NV) und Hochvolt-Gleichspannung (Ug-HV) hinterlegt sind, und eingerichtet ist, die zweite Pulsweitenmodulationsfrequenz (F2) basierend auf der Lookup-Tabelle (8.1) zu bestimmen.

4. Gleichspannungswandler (100) nach einem der vorhergehenden Ansprüche, wobei die Steuereinheit (8) eingerichtet ist, durch Einstellen einer Phasenverschiebung zwischen pulsweitenmodulierten Steuersignalen (S-NV) zum Steuern der Niedervolt-Halbleiterschalter (4.1a - 4.1d) und pulsweitenmodulierten Steuersignalen (S-HV) zum Steuern der Hochvolt-Halbleiterschalter (7.1a - 7.1d) einen über die Niedervolt-Anschlüsse (1a, 1b) abgegebenen Niedervolt-Strom (I-NV) oder einen über die Hochvolt-Anschlüsse (2a, 2b) abgegebenen Hochvolt-Strom (I-HV) zu regeln.

5. Gleichspannungswandler (100) nach einem der vorhergehenden Ansprüche, umfassend eine Klemmschaltung (5) mit mindestens einem Klemmkondensator, die mit der Niedervolt-Halbleiterbrückenschaltung (4) verbunden ist.

**Fig. 1**

8

```
┌──────────────────────────────────────────┐
│                                            │
│   ┌────────┐   ┌───┐   ┌────────┐          │
│   │ Ug-NV  │   │ n │   │ Ug-HV  │          │
│   └────────┘   └───┘   └────────┘          │
│        │         │          │              │
│        └─────────┼──────────┘              │
│                  │                         │
│                  ▼                         │
│               ┌─────┐                      │
│               │ D-t │                      │
│               └─────┘                      │
│     D-t≥50%    ╱    ╲    D-t<50%           │
│               ╱      ╲                      │
│              ▼        ▼                     │
│        ┌─────────┐ ┌───────────┐           │
│        │ D = D-t │ │ D = 50%   │           │
│        │ F = F1  │ │ F = F2>F1 │           │
│        └─────────┘ └───────────┘           │
│              ╲        ╱                     │
│               ▼      ▼                      │
│              ┌────────┐                     │
│              │ S-NV   │                     │
│              │ S-HV   │                     │
│              └────────┘                     │
│                                            │
└──────────────────────────────────────────┘
```

**Fig. 2**

EUROPÄISCHER RECHERCHENBERICHT

**Nummer der Anmeldung**

EP 25 18 7546

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | LI CONG ET AL: "A Variable Frequency Modulation Strategy for Current-Fed Dual-Active-Bridge Converter to Expand ZVS Range", 2024 IEEE APPLIED POWER ELECTRONICS CONFERENCE AND EXPOSITION (APEC), IEEE, 25. Februar 2024 (2024-02-25), Seiten 468-473, XP034597440, DOI: 10.1109/APEC48139.2024.10509332 [gefunden am 2024-05-03] | 1-5 | INV. H02M3/335 ADD. H02M3/158 H02M1/00 |
| Y | * Abbildungen 1,3 * * Seite 469, rechte Spalte * * Seite 469, linke Spalte * * Seite 470, linke Spalte * * Gleichungen 1, 8 * ----- | 1-5 | |
| A | WATANABE HIROKI ET AL: "Efficiency Improvement of Current-Fed DAB Converter by Triangular Current Mode for Wide Voltage Applications", 2022 INTERNATIONAL POWER ELECTRONICS CONFERENCE (IPEC-HIMEJI 2022- ECCE ASIA), IEEJ-IAS, 15. Mai 2022 (2022-05-15), Seiten 1051-1058, XP034142429, DOI: 10.23919/IPEC-HIMEJI2022-ECCE53331.2022.9807126 [gefunden am 2022-07-01] * Abbildungen 1,2,4 * * Kapitel III B; Gleichungen 1, 4 * ----- -/-- | 1-5 | RECHERCHIERTE SACHGEBIETE (IPC) H02M |

Der vorliegende Recherchenbericht wurde für alle Patentansprüche erstellt

| Recherchenort | Abschlußdatum der Recherche | Prüfer |
|---|---|---|
| Den Haag | 20. November 2025 | Kail, Maximilian |

Europäisches
Patentamt

European
Patent Office

Office européen
des brevets

# EUROPÄISCHER RECHERCHENBERICHT

**Nummer der Anmeldung**

EP 25 18 7546

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | GU LING ET AL: "Hybrid PWM Control of Bidirectional DC/DC Resonant Converter for Low-Current-Ripple and Wide-Voltage-Gain Application", 2020 IEEE APPLIED POWER ELECTRONICS CONFERENCE AND EXPOSITION (APEC), IEEE, 15. März 2020 (2020-03-15), Seiten 2158-2162, XP033784709, DOI: 10.1109/APEC39645.2020.9124206 [gefunden am 2020-06-23] * Abbildungen 1,5 * * Kapitel III *<br><br>----- | 1-5 | |
| Y | GU LING ET AL: "Hybrid-PWM-Controlled Current-Fed Bidirectional Series Resonant Converter With Low Current Ripple and Wide Voltage Gain", IEEE TRANSACTIONS ON INDUSTRIAL ELECTRONICS, IEEE SERVICE CENTER, PISCATAWAY, NJ, USA, Bd. 68, Nr. 8, 10. Juni 2020 (2020-06-10), Seiten 7125-7136, XP011852596, ISSN: 0278-0046, DOI: 10.1109/TIE.2020.3000090 [gefunden am 2021-04-30] * Abbildungen 1,8,9 * * Kapitel III B *<br><br>----- | 1-5 | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| Den Haag | 20. November 2025 | Kail, Maximilian |